# EUROPEAN PATENT APPLICATION

(11) **EP 1 624 373 A1**
(43) Date of publication of application: **08.02.2006**
(21) Application number: 04425618.8
(22) Date of filing: 06.08.2004
(51) Int. Cl.: G06F 9/445, G06F 11/14

(54) **Method and system for updating software of a communication apparatus in a broadband network**

(71) Applicant: Telsey S.p.A., 31055 Quinto di Treviso (IT)
(72) Inventor: Mauriuzzo, Alberto, 30024 Musille Di Piave (IT); Franco, Luca, 31050 Vedelago (IT); Monico, Sergio, 32020 Selva Di Cadore (IT)
(74) Representative: Prato, Roberto

(57) **Abstract**

A method of operation of a communication apparatus (1) for broadband networks (2), which is provided with a processing module (8), and with a non volatile memory (7) in turn comprising a first memory area (7a) able to store a series of boot-loader instructions able to be implemented by said processing means (8) in the boot phase of said apparatus (1), and a second memory area (7b) able to store a main image containing a plurality of instruction able to be implemented by the processing module (8) to perform a series of functions associated with the broadband services distributed by the apparatus (1), the method comprising the step of storing in a third memory area (7c) of said non volatile memory (7) a recovery image containing a series of recovery instructions able to be implemented by said processing module (8) in order to achieve a broadband communication between the apparatus (1) and a remote processing unit (3) through the broadband network (2).

## Description

The present invention relates to a communication apparatus for broadband networks and to the method of operation therefor.

As is well known, broadband communication apparatuses, commonly called "residential gateways" are devices able to access a broadband communication network in order to receive, through said network, data encoding information associated to broadband services provided by a remote server connected to the network itself and normally called "service provider". Currently, service providers are able to provide the residential gateway, through the broadband communication network, voice, video, home automation services and other broadband services, typically for residential use.

It is also known that the constant evolution and the increase in the complexity of the functions associated to the aforesaid broadband services have made it necessary, in the communications industry, to carry out the corresponding and periodic upgrading of the operating systems and of the different application operating programmes stored in the residential gateway. Said upgrading operations allow to obtain an increase in the flexibility and efficiency of the residential gateway in the management and in the processing of data and of the functions associated to broadband services, whilst assuring an operation that complies with the specifications and rules required by the standards set by the appropriate bodies.

For this purpose, many last generation residential gateways are able to carry out a "remote boot" directly from the service provider, which provides, when starting or re-starting the apparatus, an update of the configuration data and of the information and/or of the application programmes contained in the residential gateway. Specifically, during the "remote booting" operation, the service provider transmits the updated data and programmes through the broadband network to the residential gateway, which stores them in its flash memory, overwriting the previously stored data and programmes.

Moreover, it is known that in most of the residential gateways currently on the market the flash memory is subdivided essentially in two areas of memory, whereof the first contains the boot-loader instructions, whilst the second area contains the operating system and/or the application programmes which are implemented by the apparatus during its normal operation.

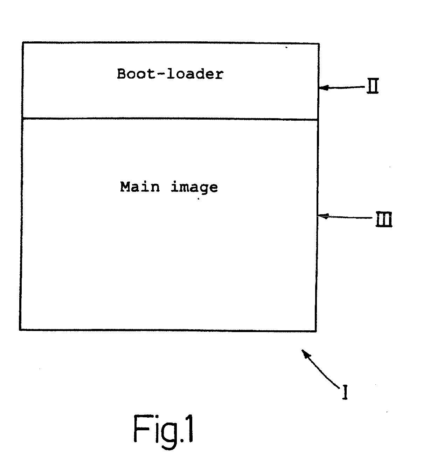

In particular, with reference to the example illustrated in Figure 1, in the flash memory I, the boot-loader stored in the first memory area II contains the main instructions implemented by the apparatus when it is started, i.e. during the boot phase to load the operating system and/or the application programmes, whilst the second memory area III, hereafter designated with the term "main image", is dedicated to storing the operating system files, such as the file system and the kernel of the operating system itself and the related application programmes.

In use, during the remote updates carried out by the service provider, typically designated with term "upgrades", performed during the boot phase, the residential gateway overwrites the file system and the kernel of the operating system and/or the application programmes contained in the main image of the flash memory with the data received by the service provider.

Unfortunately, during the upgrade of the aforementioned main image, in the residential gateways described above, events can occur which cause the interruption of the upgrade itself before its completion, thereby determining a possible state of corruption of the main image. For example, when during the upgrade of the main image an accidental interruption of the electrical power supplied to the server and/or to the residential gateway (power down) occurs, the main image remains incomplete and the residential gateway can go to a critical condition of interdiction or isolation, thus becoming unreachable with regard to broadband communication with the service provider.

The aforesaid condition of interdiction or isolation, in addition to representing an unacceptable situation for the user of the residential gateway, who obviously cannot use the requested broadband services, makes it necessary to have a direct intervention by a specialised operator, able to conduct a "local" reconfiguration, i.e. in the field, of the data and/or of the operating system and/or of the application programmes contained in the main image of the residential gateway, causing an obvious increase on the operating costs of the services for operators providing broadband services.

The object of the present invention therefore is to provide a communication apparatus for broadband networks that is free from the drawbacks described above.

According to the present invention, a method of operation of a communication apparatus for broadband networks, as described in claim 1, is provided.

According to the present invention, a communication apparatus for broadband networks, as described in claim 6, is also provided.

The present invention shall now be described with reference to the accompanying drawings, which illustrate a non-limiting embodiment thereof, in which:
- Figure 1 shows two memory areas present in a non volatile memory comprised in a communication apparatus for broadband networks according to the prior art;
- Figure 2 schematically illustrates a communication apparatus for broadband networks according to the present invention; and
- Figure 3 shows a flow chart indicating the operations implemented by the communication apparatus for broadband networks illustrated in Figure 2.

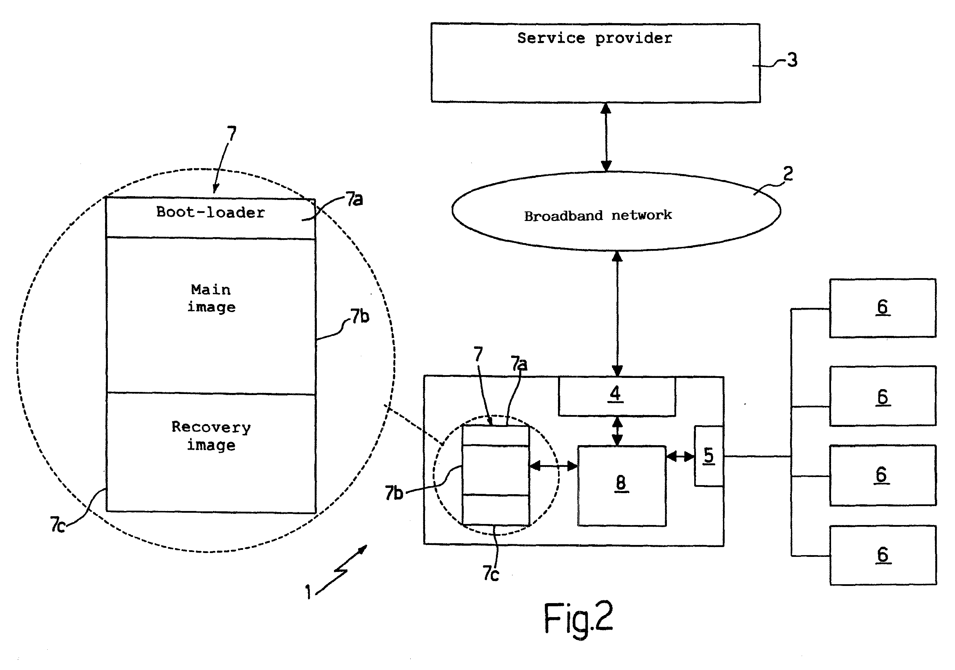

Referring to Figure 2, the reference number 1 globally designates a broadband communication apparatus, which is able to communicate through a broadband communication network 2 with a remote processing unit 3, to receive/transmit therefrom and thereto data and information associated to broadband services which can be implemented by the apparatus 1 itself.

The broadband communication apparatus 1 can be constituted by a residential gateway (access gateway, set top box, etc.), or by any other type of similar communication device able to access a broadband communication network 2 implementing a known communication protocol, such as an FTTH, ETTH, ADSL, or xDSL protocol.

In detail, the communication apparatus 1 is able to receive from the broadband network 2 any broadband service, such as a telephony service on IP (Internet Protocol), Fast Internet, IP-Videostreaming, Video on Demand, remote home automation services, home-office security control, remote office, Video Surveillance services, or any other type of service which can be communicated through a broadband network, etc.

With regard to the remote processing unit 3, it can be connected to the broadband network 2 to transmit through it one or more broadband services of the type described above, and it is further able to perform a remote update of the data and information contained in each apparatus 1 connected to the network 2 according to the method described below.

In the illustrated example, the remote processing unit 3 is constituted by a server operated by a broadband service provider, which being of a known type shall not be further described herein.

With regard instead to the communication apparatus 1, it essentially comprises a communication module 4, which is defined by a modem implementing the same communication protocol as that of the broadband network 2, such as an ADSL, xDSL protocol or any other similar protocol, and it is able to be connected to the broadband network 2 to exchange, through it, data and information with the remote processing unit 3.

The communication apparatus 1 further comprises, preferably but not necessarily, an interface module 5, which is able to manage the communication and distribution of the broadband services received by the communication apparatus 1 to one or more devices or apparatuses 6 able to implement the broadband services.

Said devices or apparatuses 6 can be connected to the interface module 5 and can comprise telephone devices and/or a network (e.g. Ethernet) whereto can be connected personal computers able to access the remote network and/or the Internet and/or Intranet, and/or at least a device such as a set top box for receiving streaming audio and/or video broadband services.

The communication apparatus 1 further comprises a non volatile memory 7 able to store a series of data, described in detail hereafter, and a processing module 8, which is able to co-ordinate and control the operation of the non volatile memory 7, of the interface module 5, and of the communication module 4.

The processing module 8 can be defined by a microprocessor, whilst the non volatile memory 7, in the illustrated example is constituted by a flash memory also designated hereafter by the same number 7.

Unlike prior art communication apparatuses, the flash memory 7 included in the communication apparatus 1 is subdivided into three memory areas, whereof the first is designated by the number 7a and is able to contain the boot-loader instructions, the second area designated by the number 7b is able to contain the main image, whilst the third area 7c contains a series of data and information defining a recovery image designated hereafter with the term "recovery image".

In particular, as stated above, the boot-loader instructions of the first memory area 7a represent the "main" instructions, able to be implemented by the apparatus 1 in the start-up phase, i.e. in the boot phase, to load the operating system and the main information, indispensable to activate communication with the broadband network 2 and for the normal operation of the apparatus 1.

The main image stored in the second memory area 7b contains the file system and the kernel of the operating system; the programmes for implementing the broadband communication protocol (e.g. the TCP/IP, AAL5, ATM, ADSL stack); and one or more application programmes that allow the apparatus 1 to perform the different functions provided by the broadband services during normal operation.

With regard instead to "the recovery image" stored in the third memory area 7c of the flash memory 7, it contains a series of instructions associated with the operating system, which, in use, are able to be implemented by the processing module 8 to re-establish a broadband communication between the apparatus 1 and the remote processing unit 3.

Specifically, the recovery image can comprise a series of instructions associated with the broadband communication protocol, e.g. the TCP/IP, AAL5, ATM, ADSL stack, and the kernel of the operating system. In other words, the recovery image contains, in optimised and reduced form, the instructions necessary and sufficient to allow the apparatus 1 automatically to re-establish a communication with the remote processing unit 3 thereby allowing the upgrade of the main image.

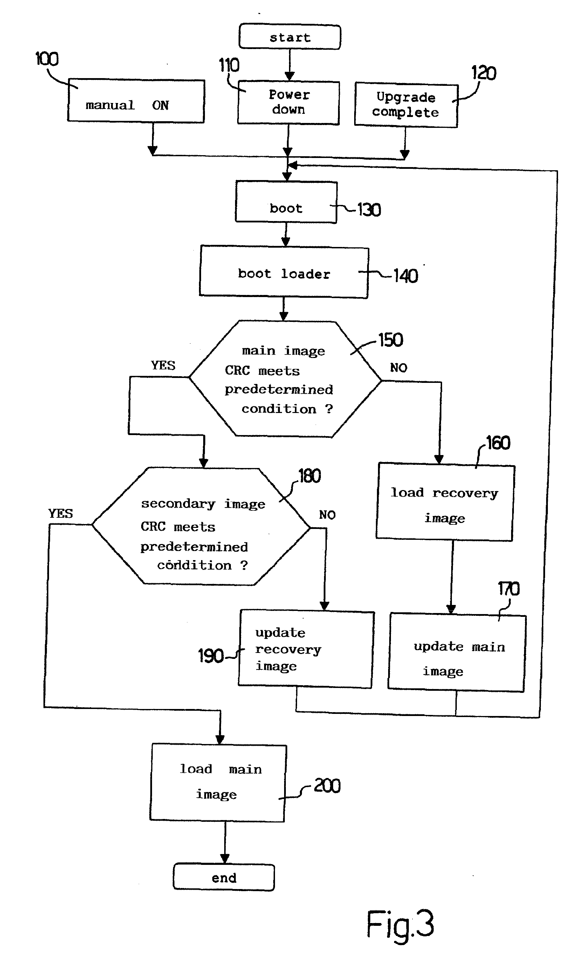

With reference to Figure 3, a flowchart is shown indicating the operations implemented by the apparatus 1, after it is turned on, i.e. as a result of a passage from the off state to the on state. This condition is typically indicated as the boot condition of the apparatus 1.

The boot condition of the apparatus 1 can be preceded and hence activated with a manual command by the user, generated by operating an "on" push-button (not shown) (block 110), or it can be preceded by a command generated by the processing module 8 when some shut-down conditions are met, such as: a generic malfunction condition of the apparatus 1, or a sudden lack of power, e.g. a power down, which determines the shut-down of the apparatus 1 (block 110), or as a result of the completion of a remote upgrade of the data, during which the main image in the second memory area 7b of the flash memory 7 is upgraded by the remote processing unit 3 (block 120).

When any of the aforesaid conditions is met, the processing module 8 receives a command signal associated with the boot command and boots the apparatus 1 (block 130) .

As a result of the reception of the boot command signal, the processing module 8 loads and implements the main boot instructions contained in the first memory area 7a of the flash memory 7 associated with the boot-loader (block 140), which contain all the information necessary to allow loading the instructions associated with the operating system and/or the application programmes stored in the main image contained in the second memory area 7b.

At this point, the processing module 8 is able to run a check on the data and information contained in the main image stored in the second memory area 7b, to verify whether they meet a first predetermined test condition. In particular, the processing module 8 is able to implement a known error control algorithm, such as a Cyclic Redundancy Check (CRC), to verify whether the data and information contained in the main image are correct or not (block 150).

If the outcome is negative (output NO from the block 150), i.e. if the first test condition is not met and the main image contained in the second memory area 7b is thus not correct, the processing module 8 loads the data and information associated with the recovery image stored in the third memory area 7c (block 160).

At this point, the processing module 8, thanks to the loading of the data and of the information contained in the recovery image, is able to achieve advantageously, in wholly automatic fashion, a communication with the broadband network 2 to transmit to the remote processing unit 3 a request to update the main image stored in the second memory area 7b.

The processing unit 3, i.e. the service provider, as a result of the reception of the update request, transmits, through the broadband network 2, data and information associated with the main image requested to the apparatus 1, which in turn receives them and overwrites the main image with the received data and information (block 170).

Once the update of the main image is completed, the processing module 8 generates a command signal to achieve a new shut-down and then a consequent re-start of the apparatus 1 (block 130).

If instead the main image contained in the second memory 7b meets the first test condition, i.e. it is correct (Output YES from the block 150), then the processing module 8 checks the data and information contained in the recovery image stored in the third memory area 7c to verify whether they meet a second predetermined test condition.

In this case, too, the processing module 8 preferably, but not necessarily, implements the CRC error control algorithm (block 180) on the recovery image to verify its correctness.

If the outcome is negative, i.e. the recovery image contained in the third memory area 7c does not meet the second predetermined test condition and hence is not correct (Output NO from the block 180), then the processing module 8 achieves, in wholly automatic fashion, a communication with the broadband network 2 to transmit to the remote processing unit 3 a request to update the recovery image (block 190).

The remote processing unit 3, i.e. the service provider, as a result of the reception of said update request, transmits, through the broadband communication network 2, data and information associated with the recovery image to the apparatus 1, which receives them and overwrites the recovery images. Once the update of the recovery image is completed, the processing module 8 commands a new start of the apparatus 1 (block 130).

If the recovery image contained in the third memory area 7c meets the second predetermined test condition and hence is correct (Output YES from the outcome 180), the processing module 8 loads and implements the instruction contained in the main image (block 200) thus allowing the user fully to employ the functionalities of the application programmes implemented by the apparatus 1.

The advantages of the apparatus 1 described above are evident: in the first place, thanks to the presence of the recovery image in the flash memory 7, the apparatus 1 is able to assure a correct operation even in the absence of power or in the presence of any condition which may cause an accidental interruption of the remote upgrade of the data and of the information contained in the main image. In this case, the apparatus 1 automatically performs the boot, identifies the condition of corrupted main image and loads the recovery image which allows it to achieve, in wholly automatic fashion, a new communication with the broadband network, and consequently a new update of the main image, and its subsequent loading.

Therefore, the apparatus 1 eliminates the need for a direct intervention in the field by a specialised operator, when a situation of corrupted or incomplete main image in the flash memory occurs, thereby markedly lowering the operating costs of broadband services.

Lastly, it should be specified that the apparatus 1 is extremely versatile and flexible; during the remote updates of the data contained in the apparatus 1, the service provider is able to change from time to time the dimensions of the memory areas dedicated to the storage of the main image and respectively of the recovery images, based on the performance and/or on the functions required from the apparatus.

For example, if it is necessary to store a main image with such functionalities as to require an increase in memory space, it is possible to optimise the instructions and the data of the recovery image, thereby reducing on one hand the third memory area 7c, and increasing on the other hand the space of the second memory area 7b dedicated to the containment of the main image. This capability thus guarantees high versatility in the management of the remote upgrade and simultaneously assures the correct operation of the apparatus 1 even in the case of updates of large application programmes and/or operating systems.

## Claims

1. A method of operation of a communication apparatus (1) for broadband networks (2), which is provided with communication means (4) able to communicate with a broadband network (2), with processing means (8), and with at least a non volatile memory (7) comprising a first memory area (7a) containing a series of boot-loader instructions able to be implemented by said processing means (8) in the boot phase of said apparatus (1), and a second memory area (7b) able to store a main image containing a plurality of instruction able to be implemented by said processing means (8) to perform the main functions associated with the broadband services implemented and/or distributed by said apparatus (1), said method being **characterised in that** it comprises the step of storing in a third memory area (7c) of said non volatile memory (7) a recovery image containing a series of recovery instructions able to be implemented by said processing means (8) in order to achieve a broadband communication between the apparatus (1) and a remote processing unit (3) through said broadband network (2).

2. Method of operation as claimed in claim 1, **characterised in that** it further comprises the step of:
- verifying (150), after said apparatus (1) is booted (1), whether said main image meets a first predetermined test condition;
- implementing (160), if said first predetermined test condition is not met, the recovery instructions contained in said recovery image stored in said third memory area (7c).

3. Method of operation as claimed in claim 2, **characterised in that** it comprises the step of performing (170), as a result of the implementation of said recovery instructions, an update of said main image in said second memory area (7b) with a new main image transmitted to said communication apparatus (1) by said remote processing unit (3) through said broadband communication network (2).

4. Method of operation as claimed in claim 3, **characterised in that** it comprises the steps of:
- if said first predetermined test condition is met, verifying (180) whether said recovery image stored in said third memory area (7c) meets a second test condition;
- if said second test condition is not met, performing (190) an update of said recovery image in said third memory area (7c) with a new recovery image transmitted to communication said apparatus (1) by said remote processing unit (3) through said broadband communication network (2).

5. Method as claimed in any of the previous claims, **characterised in that** said non volatile memory (7) is a flash memory.

6. A communication apparatus (1) for broadband networks provided with communication means (4) able to communicate with a broadband network (2), with processing means (8), and with at least a non volatile memory (7) comprising a first memory area (7a) containing a series of boot-loader instructions able to be implemented by said processing means (8) in the boot phase of said apparatus (1), and a second memory area (7b) able to store a main image containing a plurality of instruction able to be implemented by said processing means (8) to perform the main functions associated with the broadband services implemented and/or distributed by said apparatus (1); said apparatus (1) being **characterised in that** said non volatile memory (7) comprises a third memory area (7c) able to store a recovery image able to be implemented by said processing means (8) in order to achieve a broadband communication between the apparatus (1) and a remote processing unit (3) through said broadband network (2).

7. Apparatus as claimed in claim 6, **characterised in that** said processing means (8) comprise first test means (150) able to verify, as a result of the booting of said apparatus (1), whether said main image meets a first predetermined test condition; and first computing means (160) able to implement, if said first test condition is not met, the recovery instruction contained in said recovery image stored in said third memory area (7c).

8. Apparatus as claimed in claim 7, **characterised in that** said processing means (8) comprise first updating means (170), which are able to conduct an update of said main image in said second memory area (7b) with a new main image transmitted to said communication apparatus (1) by said remote processing unit (3) through said broadband communication network (2).

9. Apparatus as claimed in claim 8, **characterised in that** said processing means (8) comprise second testing means (180), which are able to test whether the recovery image stored in said third memory area (7c) meets a second test condition; and second updating means (190), which if said second test condition is not met, perform an update of said recovery image in said third memory area (7c) with a new recovery image transmitted to said communication apparatus (1) by a remote processing unit (3) through said broadband communication network (2).

10. Apparatus as claimed in any of the previous claims from 6 through 9, **characterised in that** said non volatile memory (7) is a flash memory.

## Amended claims

### Amended claims in accordance with Rule 86(2) EPC.

**1.** A method of operation of a communication apparatus (1) for broadband networks (2), which is provided with communication means (4) able to communicate with a broadband network (2), with processing means (8), and with at least a non volatile memory (7) comprising a first memory area (7a) containing a series of boot-loader instructions able to be implemented by said processing means (8) in the boot phase of said apparatus (1), and a second memory area (7b) able to store a main image containing a plurality of instruction able to be implemented by said processing means (8) to perform the main functions associated with the broadband services implemented and/or distributed by said apparatus (1), said method comprises the step of storing in a third memory area (7c) of said non volatile memory (7) a recovery image containing a series of recovery instructions able to be implemented by said processing means (8) in order to achieve a broadband communication between the apparatus (1) and a remote processing unit (3) through said broadband network (2) thereby allowing the upgrade of said main image; said method being **characterized in that** it comprises the step of change from time to time the dimensions of the second (7b) and third (7c) memory areas dedicated to the storage of the main image and respectively of the recovery images, based on the performance and/or on the functions required from the apparatus (1) .

**2.** Method of operation as claimed in claim 1, **characterised in that** said step of change the dimensions of the second (7b) and third (7c) memory areas comprises the step of reducing on one hand the third memory area (7c), and increasing on the other hand the space of the second memory area (7b) dedicated to the containment of the main image.

**3.** Method of operation as claimed in claim 1 or 2, **characterised in that** it further comprises the step of:
- verifying (150), after said apparatus (1) is booted (1), whether said main image meets a first predetermined test condition;
- implementing (160), if said first predetermined test condition is not met, the recovery instructions contained in said recovery image stored in said third memory area (7c).

**4.** Method of operation as claimed in claim 3, **characterised in that** it comprises the step of performing (170), as a result of the implementation of said recovery instructions, an update of said main image in said second memory area (7b) with a new main image transmitted to said communication apparatus (1) by said remote processing unit (3) through said broadband communication network (2).

**5.** Method of operation as claimed in claim 4, **characterised in that** it comprises the steps of:
- if said first predetermined test condition is met, verifying (180) whether said recovery image stored in said third memory area (7c) meets a second test condition;
- if said second test condition is not met, performing (190) an update of said recovery image in said third memory area (7c) with a new recovery image transmitted to communication said apparatus (1) by said remote processing unit (3) through said broadband communication network (2).

**6.** A communication apparatus (1) for broadband networks provided with communication means (4) able to communicate through broadband network (2), with processing means (8), and with at least a non volatile memory (7) comprising a first memory area (7a) containing a series of boot-loader instructions able to be implemented by said processing means (8) in the boot phase of said apparatus (1), a second memory area (7b) able to store a main image containing a plurality of instruction able to be implemented by said processing means (8) to perform the main functions associated with the broadband services implemented and/or distributed by said apparatus (1), and a third memory area (7c) able to store a recovery image able to be implemented by said processing means (8) in order to achieve a broadband communication between the apparatus (1) and a remote processing unit (3) through said broadband network (2) thereby allowing the upgrade of said main image; said apparatus (1) being **characterised in that**, said processing means (8) are able to change the dimensions of the second (7b) and third (7c) memory areas dedicated to the storage of the main image and respectively of the recovery images, based on the performance and/or on the functions required from the apparatus (1), and according to the upgrade implemented by said remote processing unit (3),

**7.** Apparatus as claimed in claim 6, **characterised in that** said processing means (8) reducing on one hand the third memory area (7c), and increasing on the other hand the space of the second memory area (7b) dedicated to the containment of the main image, according to the upgrade implemented by said remote processing unit (3).

**8.** Apparatus as claimed in claim 6 or 7, **characterised in that** said processing means (8) comprise first test means (150) able to verify, as a result of the booting of said apparatus (1), whether said main image meets a first predetermined test condition; and first computing means (160) able to implement, if said first test condition is not met, the recovery instruction contained in said recovery image stored in said third memory area (7c).

**9.** Apparatus as claimed in claim 8, **characterised in that** said processing means (8) comprise first updating means (170), which are able to conduct an update of said main image in said second memory area (7b) with a new main image transmitted to said communication apparatus (1) by said remote processing unit (3) through said broadband communication network (2).

**10.** Apparatus as claimed in claim 9, **characterised in that** said processing means (8) comprise second testing means (180), which are able to test whether the recovery image stored in said third memory area (7c) meets a second test condition; and second updating means (190), which if said second test condition is not met, perform an update of said recovery image in said third memory area (7c) with a new recovery image transmitted to said communication apparatus (1) by a remote processing unit (3) through said broadband communication network (2).
